# EUROPEAN PATENT APPLICATION

(11) **EP 3 785 825 A1**
(43) Date of publication of application: **03.03.2021**
(21) Application number: 19194664.9
(22) Date of filing: 30.08.2019
(51) Int. Cl.: B22F 3/105, B33Y 10/00, B33Y 70/00, B33Y 80/00, C22C 26/00, C22C 32/00

(54) **POWDER BLEND FOR USE IN ADDITIVE MANUFACTURING**

(71) Applicant: 3M Innovative Properties Company, Saint Paul, MN 55133-3427 (US)
(72) Inventor: Geldmacher, Andreas, 41453 Neuss (DE); Gollnick, Hans-Emanuel, 41453 Neuss (DE)
(74) Representative: Mathys & Squire

(57) **Abstract**

The present disclosure relates to a powder blend for use in additive manufacturing, which comprises a particulate metallic binder material, abrasive particles and a segregation-reducing additive for the powder blend, wherein the segregation-reducing additive comprises silica nanoparticles.

According to another aspect, the present disclosure is directed to a method of manufacturing such powder blend and uses thereof. In still another aspect, it is provided a three-dimensional article obtained by treating such powder blend by irradiation with a focused beam.

## Description

### Technical Field

The present disclosure relates generally to the field of powder blends, in particular powder blends comprising a particulate metallic binder material, and which are suitable for use in additive manufacturing. The present disclosure further relates to a process of manufacturing such powder blends and to three-dimensional articles obtained therefrom. The present disclosure is further directed to various uses of such powder blends.

### Background

The handling, mixing and delivery of bulk solids present unique difficulties when the solids are handled in powdered form. Often, one or more physical properties of the powdered particulates themselves are important, or even critical, to the application for which the composition is intended. Particulate shape, particulate size and particulate porosity often describe important physical properties or characteristics. Environmental conditions (humidity, temperature, shear forces among others) encountered by a powder during use or storage can and often do affect one or more properties of the particulates. Aggregation, agglomeration, segregation, attrition and flocculation represent the most common degradative effects on a powder and their presence or progression greatly limits the utility and viability of many powder compositions.

Achieving a uniform blend of dry bulk solids is a problem faced daily by engineers and operators in industries as varied as powder metallurgy, pharmaceuticals, foods, plastics and battery production. Even when an acceptable blend is obtained additional challenges arise in maintaining the blend through one or more pieces of downstream equipment. Poor blending or the inability to maintain an adequate blend before and during processing lead to additional and unnecessary costs, including costs associated with rejected material and decreased yields, added blending time and energy, decreased productivities, start-up delays and defective or out-of-specification products. Powder caking of raw and in-process materials, particularly during storage (in, e.g., bags or drums) can also pose significant problems. Both powder caking and an inability to achieve uniform blends and mixtures can decrease batch uniformity which, among other drawbacks, can require increased testing and sampling.

Some flowability aids are known. Fumed silica, for example, is one popular powder additive that can be used to improve flow characteristics. While relatively inexpensive, fumed silica often is ineffective in preventing agglomeration of many particle types. Flowability is also a matter of degree; many, if not most, uses of fumed silica lead to some agglomeration and aggregation. Some undemanding industrial applications can tolerate a level of agglomeration not tolerated in more demanding applications. Applications involving precise metering or mixing of a powder, however, require more. Even in relatively undemanding applications the ability to improve powder flow can provide an increase in homogeneity with milder mixing conditions or with reduced mixing periods. Additionally, increased powder flowabilities can allow utilization of lower levels of expensive ingredients, e.g., dyes and pigments, particularly where the requirement of using a level of such ingredients correlates with the dispersibility of the materials in the powder with which they are mixed.

The preparation or delivery of metal-based powder blends for use in additive manufacturing technology is particularly demanding. This particular technology, which is also referred to as 3D printing technology, encompasses various techniques such as e.g. direct metal laser sintering (DMLM), selective laser melting (SLM), selective laser sintering (SLS), electron-beam melting (EBM) or direct deposition, enables the quick production of complex shaped three-dimensional parts directly from metal or polymer powder. The additive manufacturing process typically uses a bed of loose powder, which flowability and/or spreading properties will play a crucial role while trying to produce fine-featured parts.

When used to produce abrasive articles, additive manufacturing processes typically use powder blends comprising a metallic bonding matrix and abrasive particles. The powder blends which typically comprise particulate material having very different shapes, sizes and density, would naturally tend to segregate during handling and conveying steps, with the lighter and bigger abrasive particles migrating to the top of the powder blend. The problem of segregation is even more exacerbated when the particulate material used in the powder blend have significantly different sizes. This problem is partially alleviated when using an additive in the form of a third particulate material or a binding agent, which is meant to reduce the mobility of the various particulate material. However, the use of these additives is known to inhibit the overall flowability of the initial powder blend. Such a partial solution is disclosed e.g. in U.S. Pat. No. 5,069,714 (Gosselin).

Without contesting the technical advantages associated with the solutions known in the art, there is still a need for a powder blend suitable for use in additive manufacturing and which overcomes the above-described deficiencies.

### Summary

According to one aspect, the present disclosure relates to a powder blend for use in additive manufacturing, which comprises a particulate metallic binder material, abrasive particles and a segregation-reducing additive for the powder blend, wherein the segregation-reducing additive comprises silica nanoparticles.

According to another aspect, the present disclosure is directed to a method of manufacturing a powder blend suitable for use in additive manufacturing, wherein the method comprises the step of mixing a particulate metallic binder material, abrasive particles and a segregation-reducing additive comprising silica nanoparticles.

In still another aspect, the present disclosure is directed to a three-dimensional article obtained by treating a powder blend as described above by irradiation with a focused beam.

According to yet another aspect, the present disclosure relates to the use of a powder as described above for additive manufacturing.

### Brief Description of the Drawings

**FIG. 1** is a scanning electron microscope image of a powder blend according to one aspect of the present disclosure.
**FIG. 2** is a scanning electron microscope image of a comparative powder blend not according to the present disclosure.
**FIG. 3** is a magnified scanning electron microscope image of the powder blend represented in **FIG. 1****.**
**FIG. 4** is a magnified scanning electron microscope image of the powder blend represented in **FIG. 2****.**

### Detailed description

According to a first aspect, the present disclosure relates to a powder blend for use in additive manufacturing, which comprises a particulate metallic binder material, abrasive particles and a segregation-reducing additive for the powder blend, wherein the segregation-reducing additive comprises silica nanoparticles.

In the context of the present disclosure, it has surprisingly been found that a powder blend as described above, is outstandingly suitable for use in additive manufacturing, in particular additive manufacturing processes involving the step of treating the powder blend by irradiation with a focused beam.

In particular, powder blends as described above have been found to provide excellent balance of flowability and anti-segregation properties, which makes them particularly suitable for the handling and conveying steps typically used in additive manufacturing processes. Powder material provided with these advantageous characteristics are particularly suitable to produce three-dimensional articles provided with homogeneous and fine-featured parts.

Without wishing to be bound by theory, it is believed that this outstanding suitability for additive manufacturing is due to the specific combination of the technical characteristics as described above, and in particular to the incorporation of a segregation-reducing additive comprising silica nanoparticles.

The Applicant was faced with the challenge of formulating powder compositions comprising a particulate metallic binder material and abrasive particles which is particularly suitable for additive manufacturing. In other words, the Applicant addressed the particularly challenging technical problem of formulating a powder blend provided with an excellent balance of flowability and anti-segregation properties, starting from a powder material comprising particles having very different shapes, sizes and density. To the Applicant's knowledge, the use of silica nanoparticles as segregation-reducing additive in a powder blend comprising a particulate metallic binder material and abrasive particles, has never been reported before.

It has been further discovered that, in the powder blend of the present disclosure, at least part of the silica nanoparticles is bond to at least part of the surface of the abrasive particles presumably via physical interactions, in particular via electrostatic interactions. In some aspects of the disclosure, at least part of the silica nanoparticles may form a layer on at least part of the surface of the abrasive particles.

Still without wishing to be bound by theory, it is believed that the silica nanoparticles present on at least part of the surface of the abrasive particles are able to modify (i.e. increase) the coefficient of friction of the resulting abrasive particles, such that the particulate metallic binder material contacting the abrasive particles modified by the silica nanoparticles would see their flowability parameter reduced and substantially matching the flowability of the modified abrasive particles. In other words, the silica nanoparticles present on at least part of the surface of the abrasive particles enable an alignment of the flowability properties between the modified abrasive particles and the particulate metallic binder material, which in turn would result into a substantial reduction, or even the absence of segregation between these two types of particulate material.

This is a very surprising and counterintuitive finding as silica nanoparticles are normally known and used as flowability enhancer, owing in particular to their friction reduction properties (lubrication effect). According to the present disclosure, the use of the silica nanoparticles as segregation inhibitor is based on the exact opposite effect, which is flowability reduction owing to friction increase brought to the abrasive particles. As such, it is counterintuitive to use flowability-reducing additives in powder blends suitable for use in additive manufacturing since flowability, mixing and spreading properties play a decisive role in obtaining three-dimensional articles provided with fine resolution. Surprising, the powder blends of the present disclosure are provided with an excellent balance of flowability and anti-segregation properties, which makes them particularly suitable for use in additive manufacturing.

In the context of the present disclosure, it has been further discovered that the incorporation of silica nanoparticles (non-metallic particles) as segregation inhibitor in the powder blend does not detrimentally affect its processability in additive manufacturing processes. In particular, the silica nanoparticles have been found not to be detrimental to the special bonding interaction that normally exists between the particulate metallic binder material and the abrasive particles and which advantageously affect the processability in additive manufacturing. This is again a very surprising and counterintuitive finding as the silica nanoparticles would normally have been expected to substantially reduce this bonding interaction owing the lubrication effect brought by the silica nanoparticles to both the particulate metallic binder material and the abrasive particles.

Unless indicated otherwise, the total amounts of ingredients of a powder composition expressed as percentage by volume of that composition add up to 100 %, i.e. the total volume of the composition is always 100 % by volume unless stated otherwise.

The powder blend according to the present disclosure comprises a particulate metallic binder material. Particulate metallic binder material for use herein are not particularly limited. Any particulate metallic binder material commonly known in the art of metallic powder blends may be used in the context of the present disclosure. Suitable particulate metallic binder material for use herein may be easily identified by those skilled in the art in the light of the present disclosure.

In an exemplary aspect of the powder according to the disclosure, the average particle size of the particulate metallic binder material for use herein is in a range from 1 to 100 micrometers, from 1 to 90 micrometers, from 1 to 80 micrometers, from 2 to 70 micrometers, from 2 to 60 micrometers, from 2 to 50 micrometers, or even from 5 to 50 micrometers.

According to one advantageous aspect, the metallic binder material for use herein is selected from the group consisting of cobalt, chromium, bronze, copper, tin, iron, iron alloys, silver, nickel, tungsten, titanium, manganese, aluminum, silicon, any carbide or nitride forms thereof, and any combinations, mixtures or alloys thereof.

In a more advantageous aspect, the metallic binder material for use herein is selected from the group consisting of cobalt, chromium, cobalt-chromium alloys, copper, aluminum alloys, copper-silver alloys, copper-phosphorus alloys, nickel-phosphorus alloys, silver alloys, and any combinations or mixtures thereof.

In still a more advantageous aspect, the metallic binder material for use herein is selected from the group consisting of cobalt, chromium, cobalt-chromium alloys, and any combinations or mixtures thereof.

According to a particularly advantageous aspect, the metallic binder material for use in the present disclosure is selected to comprise cobalt-chromium alloys.

In a typical aspect, the powder blend according to the disclosure comprises the particulate metallic binder material in an amount ranging from 60 vol.% to 98 vol.%, from 70 vol.% to 95 vol.%, from 75 vol.% to 95 vol.%, from 80 vol.% to 95 vol.%, or even from 80 vol.% to 90 vol.%, based on the total volume of the powder blend.

The powder blend according to the present disclosure further comprises abrasive particles. Abrasive particles for use herein are not particularly limited. Any abrasive particles commonly known in the art of metallic powder blends may be used in the context of the present disclosure. Suitable abrasive particles for use herein may be easily identified by those skilled in the art in the light of the present disclosure.

According to one typical aspect, the average particle size of the abrasive particles for use in the present disclosure is greater than the average particle size of the particulate metallic binder material.

According to one advantageous aspect of the disclosure, the ratio of the average particle size of the abrasive particles to the average particle size of the particulate metallic binder material is in a range from 1.1 to 20, from 1.1 to 18, from 1.2 to 15, from 1.2 to 10, from 1.5 to 10, or even from 1.5 to 5.

According to an exemplary aspect, the average particle size of the abrasive particles is in a range from 1 to 200 micrometers, from 1 to 180 micrometers, from 2 to 150 micrometers, from 5 to 150 micrometers, from 5 to 100 micrometers, from 5 to 80 micrometers, from 10 to 80 micrometers, from 10 to 60 micrometers, or even from 20 to 60 micrometers.

In one typical aspect, the bulk density of the abrasive particles is smaller than the bulk density of the particulate metallic binder material.

In another typical aspect of the powder blend, the ratio of the bulk density of the particulate metallic binder material to the bulk density of the abrasive particles is in a range from 1.1 to 20, from 1.1 to 18, from 1.2 to 15, from 1.2 to 10, from 1.5 to 10, or even from 1.5 to 5. Unless indicated otherwise, the bulk density of the various particulate material is measured according to ASTM D7481 - 18.

Typically, the abrasive particles for use herein have a Mohs hardness of at least 4, at least 5, more at least 6, at least 7, at least 8, at least 8.5, or even at least 9. In a particular aspect of the disclosure, the abrasive particles comprise superabrasive particles. As used herein, the term "superabrasive" refers to any abrasive particle having a hardness greater than or equal to that of silicon carbide (e.g., silicon carbide, boron carbide, cubic boron nitride, and diamond).

Specific examples of suitable abrasive materials include aluminum oxide (e.g., alpha alumina) materials (e.g., fused, heat-treated, ceramic, and/or sintered aluminum oxide materials), silicon carbide, titanium diboride, titanium nitride, boron carbide, tungsten carbide, titanium carbide, aluminum nitride, diamond, cubic boron nitride, garnet, fused alumina-zirconia, sol-gel derived abrasive particles, cerium oxide, zirconium oxide, titanium oxide, and combinations thereof. Examples of sol-gel derived abrasive particles can be found in U.S. Pat. No. 4,314,827 (Leitheiser et al.); U.S. Pat. No. 4,623,364 (Cottringer et al.); U.S. Pat. No. 4,744,802 (Schwabel); U.S. Pat. No. 4,770,671 (Monroe et al.); and U.S. Pat. No. 4,881,951 (Monroe et al.). Agglomerate abrasive particles that comprise finer abrasive particles in a vitreous bond matrix (e.g., as described in U.S. Pat. No. 6,551,366 (D'Souza et al.)) may also be used.

According to one advantageous aspect of the disclosure, the abrasive particles for use herein comprise a material selected from the group consisting of diamond, boron nitride, cubic boron nitride, silicon carbide, boron carbide, silicon nitride, metal oxide ceramic, metal nitride ceramic, metal carbide ceramic, any combinations or mixtures thereof.

According to a more advantageous aspect of the disclosure, the abrasive particles for use herein comprise a material selected from the group consisting of diamond, boron nitride, in particular cubic boron nitride, and any combinations or mixtures thereof.

In an exemplary aspect, the abrasive particles for use in the disclosure are selected from the group consisting of shaped particles, precisely shaped particles, crushed particles, platelets, rods, flakes, agglomerates of particles, shaped agglomerates of particles, and any combinations or mixtures thereof.

In a preferred aspect, the abrasive particles for use herein are individual (non-aggregated and non-agglomerated) particles.

According to a beneficial aspect of the powder blend of the disclosure, at least part of the abrasive particles comprise a coating disposed thereon.

It has been indeed found that certain abrasive particles for use herein (in particular, diamond particles) can be susceptible to damage when metal bond abrasive articles are prepared using an additive manufacturing method that employs a focused beam of energy. The use of a coating on the surface of the abrasive particles can minimize the amount of heat transferred to the abrasive particles during exposure to the focused beam. The coating can protect the abrasive particles during the process in multiple ways: reflecting the focused beam, absorbing energy, and insulating the abrasive particles from heat.

When the abrasive particles are provided with a coating, the coating may beneficially comprise nickel, copper, titanium, chromium, tungsten, zirconium, molybdenum, vanadium, palladium, silicon, iron, aluminum, cobalt, nickel, a heat resistant superalloy, or alloys or combinations thereof. As used herein, "superalloy" refers to alloys as defined by N.S. Stoloff in "Wrought and Powder Metallurgy (P/M) Superalloys" as heat-resisting alloys based on nickel, nickel-iron, or cobalt that exhibit a combination of mechanical strength and resistance to surface degradation. (ASM Handbook, Volume 1: Properties and Selection: Irons, Steels, and High-Performance Alloys - Section: Specialty Steels and Heat-Resistant Alloys, 1990, pp. 950-980.) The alloys cited by Stoloff are included in that definition and for instance the nickel-chromium-molybdenum alloy available under the trade designation HASTELLOY from Haynes International (Kokomo, IN)).

One or more coatings may be formed on abrasive particles using methods such as electroplating, chemical vapor deposition, or physical vapor deposition of the coating material on the abrasive particles (e.g., as described in US Patent No. 7,727,931 (Brey et al.) or US Patent No. 4,612,242 (Vesley et al.)), chemical deposition of the coating material from solution on the abrasive particles, or tumbling the abrasive particles with a powdered coating material and a binder.

According to one advantageous aspect of the disclosure, the coating that may be disposed on at least part of the surface of the abrasive particles comprises a material selected from the group consisting of metals, metal oxides, metal carbides, metal nitrides, metalloids, and any combinations, mixtures or alloys thereof.

According to a more advantageous aspect, the coating for use herein comprises a material selected from the group consisting of tungsten, titanium, chromium, zirconium, tantalum, molybdenum, vanadium, palladium, silicon, aluminum, iron, cobalt, nickel, silver, copper, boron, and any mixtures, combinations or alloys thereof.

According to an even more advantageous aspect, the coating for use in the disclosure comprises a material selected from the group consisting of tungsten, titanium, and any mixtures, combinations or alloys thereof.

According to another advantageous aspect, the coating for use herein comprises a material having a melting point of at least 1300°C. Providing a coating comprising at least one material having a melting point of 1300 Celsius degrees or greater, and advantageously a heat capacity of 250 J/kg/K or greater, a heat conductivity of 200 W/m/K or less, or combinations thereof, can be successful in protecting the abrasive particles from damage during additive manufacturing of a three-dimensional article.

In an exemplary aspect of the disclosure, the coating for use herein has a thickness in a range from 100 nanometers and 50 micrometers.

In a typical aspect, the powder blend according to the disclosure comprises the abrasive particles in an amount ranging from 1 vol.% to 40 vol.%, from 1 vol.% to 35 vol.%, from 2 vol.% to 30 vol.%, from 5 vol.% to 30 vol.%, from 5 vol.% to 25 vol.%, from 5 vol.% to 20 vol.%, from 5 vol.% to 15 vol.%, or even from 10 vol.% to 15 vol.%, based on the total volume of the powder blend.

The powder blend according to the present disclosure further comprises a segregation-reducing additive comprising silica nanoparticles. Silica nanoparticles for use herein are not particularly limited. Any silica nanoparticles commonly known in the art of powder blends may be used in the context of the present disclosure. Suitable silica nanoparticles for use herein may be easily identified by those skilled in the art in the light of the present disclosure.

According to one typical aspect of the powder blend of the disclosure, the average particle size of the silica nanoparticles is smaller than the average particle size of the abrasive particles.

According to another typical aspect of the powder blend of the disclosure, the average particle size of the silica nanoparticles is smaller than the average particle size of the particulate metallic binder material.

In one exemplary aspect of the present disclosure, at least part of the silica nanoparticles is bond to at least part of the surface of the abrasive particles, thereby forming silica nanoparticles-modified abrasive particles.

In one typical aspect of the powder blend, at least part of the silica nanoparticles is bond to at least part of the surface of the abrasive particles via physical interactions, in particular via electrostatic interactions.

In another typical aspect of the powder blend, at least part of the silica nanoparticles forms a layer on at least part of the surface of the abrasive particles.

According to one advantageous aspect of the disclosure, the average particle size of the silica nanoparticles is no greater than 300 nanometers, no greater than 250 nanometers, no greater than 200 nanometers, no greater than 150 nanometers, no greater than 100 nanometers, no greater than 80 nanometers, no greater than 60 nanometers, no greater than 50 nanometers, no greater than 40 nanometers, no greater than 30 nanometers, no greater than 20 nanometers, or even no greater than 10 nanometers.

According to another advantageous aspect of the disclosure, the average particle size of the silica nanoparticles is in a range from 0.5 to 300 nanometers, from 1 to 200 nanometers, from 1 to 150 nanometers, from 2 to 150 nanometers, from 2 to 100 nanometers, from 2 to 80 nanometers, from 2 to 60 nanometers, from 2 to 50 nanometers, from 2 to 40 nanometers, from 2 to 30 nanometers, from 2 to 20 nanometers, or even from 2 to 10 nanometers.

According to still another aspect, the silica nanoparticles for use herein are individual (non-aggregated and non-agglomerated) particles.

In one particular aspect, at least part of the silica nanoparticles for use herein is provided with a surface modification, which is in particular provided by surface-modifying agents.

In one advantageous aspect, the surface-modifying agents for use in conjunction with the silica nanoparticles are selected from the group consisting of hydrophobic surface groups, hydrophilic surface groups, and any combinations or mixtures thereof.

According to a more advantageous aspect, the surface-modifying agents for use herein are selected from the group consisting of hydrophobic surface groups, in particular organosilanes.

Silica nanoparticles for use herein and processes for manufacturing thereof are described for example in U.S. Pat. No. 8,062,670 (Baran, Jr. et al.).

In a typical aspect, the powder blend according to the disclosure comprises the segregation-reducing additive in an amount ranging from 0.01 vol.% to 10 vol.%, from 0.05 vol.% to 10 vol.%, from 0.05 vol.% to 8 vol.%, from 0.1 vol.% to 8 vol.%, from 0.2 vol.% to 8 vol.%, from 0.2 vol.% to 6 vol.%, from 0.5 vol.% to 6 vol.%, from 0.5 vol.% to 5 vol.%, or even from 1 vol.% to 5 vol.%, based on the total volume of the powder blend.

According to a particular aspect, the powder blend according to the disclosure comprises:
a) from 60 vol.% to 98 vol.%, from 70 vol.% to 95 vol.%, from 75 vol.% to 95 vol.%, from 80 vol.% to 95 vol.%, or even from 80 vol.% to 90 vol.%, of the particulate metallic binder material;
b) from 1 vol.% to 40 vol.%, from 1 vol.% to 35 vol.%, from 2 vol.% to 30 vol.%, from 5 vol.% to 30 vol.%, from 5 vol.% to 25 vol.%, from 5 vol.% to 20 vol.%, from 5 vol.% to 15 vol.%, or even from 10 vol.% to 15 vol.%, of the abrasive particles; and
c) from 0.01 vol.% to 10 vol.%, from 0.05 vol.% to 10 vol.%, from 0.05 vol.% to 8 vol.%, from 0.1 vol.% to 8 vol.%, from 0.2 vol.% to 8 vol.%, from 0.2 vol.% to 6 vol.%, from 0.5 vol.% to 6 vol.%, from 0.5 vol.% to 5 vol.%, or even from 1 vol.% to 5 vol.%, of the segregation-reducing additive;
wherein the volume percentages are based on the total volume of the powder blend.

According to another aspect, the present disclosure is directed to a method of manufacturing a powder blend suitable for use in additive manufacturing, wherein the method comprises the step of mixing a particulate metallic binder material, abrasive particles and a segregation-reducing additive comprising silica nanoparticles.

The various constituents of the powder blend according to the disclosure may be simply mixed using techniques and equipment commonly known in the art of the powder compositions. An optional sieving step or speedmixer may be used to break any agglomerated or aggregated material in the powder blend.

According to still another aspect, the present disclosure relates to a method of treating a powder blend suitable for use in additive manufacturing and which comprises a particulate metallic binder material and abrasive particles, wherein the method comprises the step of incorporating a segregation-reducing additive comprising silica nanoparticles.

In yet another aspect of the present disclosure, it is provided a method of reducing the segregation of a powder blend which comprises a particulate metallic binder material and abrasive particles, wherein the method comprises the step of incorporating silica nanoparticles.

In yet another aspect of the present disclosure, it is provided a method of manufacturing a three-dimensional article comprising the step of treating a powder blend as described above by irradiation with a focused beam (of energy).

According to a particular aspect of this method of manufacturing a three-dimensional article, the method comprises the sequential steps of:
a) performing a subprocess comprising the sequential steps of:
   i. depositing a layer of a powder blend as described above in a confined region;
   ii. optionally, spreading the layer of the powder blend, in particular with a spreading bar, to provide a substantially uniform thickness; and
   iii. selectively treating an area of the layer of the powder blend by irradiation with a focused beam to bond the metallic binder particles together;
b) independently carrying out step a) a plurality of times to generate a three-dimensional article comprising the bonded particles and remaining non-bonded powder blend, wherein in each step a), the powder blends are independently selected; and
c) separating substantially all the remaining non-bonded powder blend from the three-dimensional article, wherein the three-dimensional article comprises the abrasive particles and the silica nanoparticles retained in the metallic binder material.

The method of manufacturing a three-dimensional article as described above is advantageously an additive manufacturing process, whereby the three-dimensional article is formed in a layer-by-layer manner.

The various layers for use in the method of manufacturing a three-dimensional article are preferably of substantially uniform thickness. For example, the thickness of the layer may vary, such as 50 micrometers or less, 40 micrometers or less, 30 micrometers or less, 20 micrometers or less, or even 10 micrometers or less. The layers may have any thickness up to about 1 millimeter, as long as the focused beam can bind all the powder blend where it is applied. In a particular aspect, the thickness of the layers of powder blend for use herein is in a range from 10 micrometers to about 500 micrometers, from 10 micrometers to 250 micrometers, or even from 20 micrometers to 250 micrometers.

The method of manufacturing a three-dimensional article further comprises the step of selectively treating an area of the layer of the powder blend by irradiation with a focused beam to bond the metallic binder particles together.

In a typical aspect, the focused beam is provided by coupling an energy source with a mirror. In an exemplary aspect, the mirror is a galvo mirror scanner. Both lasers and e-beam sources are capable of emitting a beam of energy. Suitable energy sources include for instance and without limitation, fiber lasers, CO₂ lasers, disk lasers, and solid-state lasers, and a suitable e-beam (e.g., electron beam) is available under the trade designations Arcam Q10plus, Arcam Q20plus, and Arcam A2 (Arcam AB, Molndal, Sweden).

In an exemplary aspect, the focused beam comprises laser irradiation providing an energy density of 1.2 Joules per square millimeter (J/mm²) or less, 1.0 J/mm² or less, 0.5 J/mm² or less, or 0.1 J/mm² or less, to the loose powder particles. In another aspect, the focused beam comprises e-beam radiation providing an energy density of 1.2 J/mm² or less (e.g., a power of up to 3,000 W and a beam diameter between 150-200 micrometers).

According to the method as described above, the focused beam bonds together the loose powder particles in at least one predetermined region of the loose powder particles to form a layer of bonded powder particles; for example, by selective laser melting or metal sintering of the metallic binder particles.

The above steps i) to iii) are then repeated with changes to the region where the beam is focused according to a predetermined design resulting through repetition, layer on layer, in a three-dimensional (3-D) article. In each repetition, the loose powder particles may be independently selected; that is, the loose powder particles may be the same as, or different from those in adjacent deposited layers.

Additive manufacturing equipment suitable for practicing the present disclosure is commercially available, for example, from ReaLizer GmbH (Borchen, Germany) or from EOS GmbH Electro Optical Systems (Krailling, Germany).

The metal bond 3-D article comprises the bonded powder particles and remaining loose powder particles. Once sufficient repetitions have been carried out to form the metal bond article, it is preferably separated from substantially all (e.g., at least 85 percent, at least 90 percent, preferably at least 95 percent, and more preferably at least 99 percent) of the remaining loose powder particles, although this is not a requirement.

The method can provide a useful metal bond 3-D article that does not require further processing. In certain embodiments, however, the method can further include the step of d) heating the metal bond article in a hot isostatic press or in a furnace in an atmosphere comprising hydrogen.

According to one advantageous aspect of the method of manufacturing a three-dimensional article, the focused beam for use herein comprises laser irradiation or e-beam irradiation.

According to another advantageous aspect of the method of manufacturing a three-dimensional article, the step of treating the powder blend by irradiation with a focused beam comprises selective laser melting.

All the particular and advantageous aspects relating to the particulate metallic binder material, abrasive particles and segregation-reducing additive as described above in the context of the powder blend, are fully applicable to the various methods as described above.

In still another aspect, the present disclosure is directed to a three-dimensional article obtained by treating a powder blend as described above by irradiation with a focused beam, in particular a laser or e-beam irradiation.

Three-dimensional articles that could be obtained by treating a powder blend as described above by irradiation with a focused beam are not particularly limited. The articles of the present disclosure include essentially any known metal bond articles.

According to an advantageous aspect, the three-dimensional article of the present disclosure is selected from the group of abrasive articles, in particular selected from the group consisting of grinding tools, drilling tools, and milling tools.

In an exemplary aspect, the three-dimensional article of the present disclosure is selected from the group of dental burs, grinding pins, and abrasive wheels. This includes in particular abrasive pads, abrasive grinding bits, abrasive segments, abrasive wheels, and rotary dental tool such as e.g., a dental drill bit, a dental bur, or a dental polishing tool.

All the particular and advantageous aspects relating to the particulate metallic binder material, abrasive particles and segregation-reducing additive as described above in the context of the powder blend, are fully applicable to the three-dimensional article as described above.

According to yet another aspect, the present disclosure relates to the use of a powder as described above for additive manufacturing, in particular for the manufacturing of a three-dimensional article. Advantageously, the additive manufacturing of the three-dimensional article comprises the step of treating the powder blend by irradiation with a focused beam, in particular a laser or e-beam irradiation. Advantageously still, the additive manufacturing of the three-dimensional article comprises a selective laser melting step.

According to yet another aspect, the present disclosure relates to the use of silica nanoparticles for reducing the segregation of a powder blend which comprises a particulate metallic binder material and abrasive particles.

All the particular and advantageous aspects relating to the particulate metallic binder material, abrasive particles and segregation-reducing additive as described above in the context of the powder blend and the various methods, as well as the various process-related aspects described above in the context of the method of manufacturing a three-dimensional article, are fully applicable to the various uses as described above.
Item 1 is a powder blend for use in additive manufacturing, which comprises a particulate metallic binder material, abrasive particles and a segregation-reducing additive for the powder blend, wherein the segregation-reducing additive comprises silica nanoparticles.
Item 2 is a powder blend according to any of the preceding items, wherein the average (primary or agglomerate) particle size (diameter) of the abrasive particles is greater than the average (primary or agglomerate) particle size (diameter) of the particulate metallic binder material.
Item 3 is a powder blend according to any of the preceding items, wherein the ratio of the average (primary or agglomerate) particle size (diameter) of the abrasive particles to the average (primary or agglomerate) particle size (diameter) of the particulate metallic binder material is in a range from 1.1 to 20, from 1.1 to 18, from 1.2 to 15, from 1.2 to 10, from 1.5 to 10, or even from 1.5 to 5.
Item 4 is a powder blend according to any of the preceding items, wherein the average (primary or agglomerate) particle size (diameter) of the silica nanoparticles is smaller than the average particle size of the abrasive particles.
Item 5 is a powder blend according to any of the preceding items, wherein the average particle size of the silica nanoparticles is smaller than the average particle size of the particulate metallic binder material.
Item 6 is a powder blend according to any of the preceding items, wherein at least part of the silica nanoparticles is bond to at least part of the surface of the abrasive particles, thereby forming silica nanoparticles-modified abrasive particles.
Item 7 is a powder blend according to item 6, wherein the at least part of the silica nanoparticles is bond to at least part of the surface of the abrasive particles via physical interactions, in particular via electrostatic interactions.
Item 8 is a powder blend according to any of item 6 or 7, wherein the at least part of the silica nanoparticles forms a layer on at least part of the surface of the abrasive particles.
Item 9 is a powder blend according to any of the preceding items, wherein the average (primary or agglomerate) particle size (diameter) of the particulate metallic binder material is in a range from 1 to 100 micrometers, from 1 to 90 micrometers, from 1 to 80 micrometers, from 2 to 70 micrometers, from 2 to 60 micrometers, from 2 to 50 micrometers, or even from 5 to 50 micrometers.
Item 10 is a powder blend according to any of the preceding items, wherein the average (primary or agglomerate) particle size (diameter) of the abrasive particles is in a range from 1 to 200 micrometers, from 1 to 180 micrometers, from 2 to 150 micrometers, from 5 to 150 micrometers, from 5 to 100 micrometers, from 5 to 80 micrometers, from 10 to 80 micrometers, from 10 to 60 micrometers, or even from 20 to 60 micrometers.
Item 11 is a powder blend according to any of the preceding items, wherein the average (primary or agglomerate) particle size (diameter) of the silica nanoparticles is no greater than 300 nanometers, no greater than 250 nanometers, no greater than 200 nanometers, no greater than 150 nanometers, no greater than 100 nanometers, no greater than 80 nanometers, no greater than 60 nanometers, no greater than 50 nanometers, no greater than 40 nanometers, no greater than 30 nanometers, no greater than 20 nanometers, or even no greater than 10 nanometers.
Item 12 is a powder blend according to any of the preceding items, wherein the average (primary or agglomerate) particle size (diameter) of the silica nanoparticles is in a range from 0.5 to 300 nanometers, from 1 to 200 nanometers, from 1 to 150 nanometers, from 2 to 150 nanometers, from 2 to 100 nanometers, from 2 to 80 nanometers, from 2 to 60 nanometers, from 2 to 50 nanometers, from 2 to 40 nanometers, from 2 to 30 nanometers, from 2 to 20 nanometers, or even from 2 to 10 nanometers.
Item 13 is a powder blend according to any of the preceding items, wherein the bulk density of the abrasive particles is smaller than the bulk density of the particulate metallic binder material.
Item 14 is a powder blend according to any of the preceding items, wherein the ratio of the bulk density of the particulate metallic binder material to the bulk density of the abrasive particles is in a range from 1.1 to 20, from 1.1 to 18, from 1.2 to 15, from 1.2 to 10, from 1.5 to 10, or even from 1.5 to 5.
Item 15 is a powder blend according to any of the preceding items, wherein the metallic binder material is selected from the group consisting of cobalt, chromium, bronze, copper, tin, iron, iron alloys, silver, nickel, tungsten, titanium, manganese, aluminum, silicon, any carbide or nitride forms thereof, and any combinations, mixtures or alloys thereof.
Item 16 is a powder blend according to any of the preceding items, wherein the metallic binder material is selected from the group consisting of cobalt, chromium, cobalt-chromium alloys, copper, aluminum alloys, copper-silver alloys, copper-phosphorus alloys, nickel-phosphorus alloys, silver alloys, and any combinations or mixtures thereof.
Item 17 is a powder blend according to any of the preceding items, wherein the metallic binder material is selected from the group consisting of cobalt, chromium, cobalt-chromium alloys, and any combinations or mixtures thereof.
Item 18 is a powder blend according to any of the preceding items, wherein the abrasive particles comprise a material selected from the group consisting of diamond, boron nitride, cubic boron nitride, silicon carbide, boron carbide, silicon nitride, metal oxide ceramic, metal nitride ceramic, metal carbide ceramic, any combinations or mixtures thereof.
Item 19 is a powder blend according to any of the preceding items, wherein the abrasive particles comprise a material selected from the group consisting of diamond, boron nitride, in particular cubic boron nitride, and any combinations or mixtures thereof.
Item 20 is a powder blend according to any of the preceding items, wherein the abrasive particles are selected from the group consisting of shaped particles, precisely shaped particles, crushed particles, platelets, rods, flakes, agglomerates of particles, shaped agglomerates of particles, and any combinations or mixtures thereof.
Item 21 is a powder blend according to any of the preceding items, wherein the abrasive particles are individual (non-aggregated and non-agglomerated) particles
Item 22 is a powder blend according to any of the preceding items, wherein at least part of the abrasive particles comprise a coating disposed thereon.
Item 23 is a powder blend according to item 22, wherein the coating disposed on at least part of the surface of the abrasive particles comprises a material selected from the group consisting of metals, metal oxides, metal carbides, metal nitrides, metalloids, and any combinations, mixtures or alloys thereof.
Item 24 is a powder blend according to any of item 22 or 23, wherein the coating comprises a material selected from the group consisting of tungsten, titanium, chromium, zirconium, tantalum, molybdenum, vanadium, palladium, silicon, aluminum, iron, cobalt, nickel, silver, copper, boron, and any mixtures, combinations or alloys thereof.
Item 25 is a powder blend according to any of items 22 to 24, wherein the coating comprises a material selected from the group consisting of tungsten, titanium, and any mixtures, combinations or alloys thereof.
Item 26 is a powder blend according to any of items 22 to 25, wherein the coating comprises a material having a melting point of at least 1300°C.
Item 27 is a powder blend according to any of items 22 to 26, wherein the coating has a thickness in a range from 100 nanometers and 50 micrometers.
Item 28 is a powder blend according to any of the preceding items, wherein the silica nanoparticles are individual (non-aggregated and non-agglomerated) particles.
Item 29 is a powder blend according to any of the preceding items, wherein at least part of the silica nanoparticles is provided with a surface modification, which is in particular provided by surface-modifying agents.
Item 30 is a powder blend according to item 29, wherein the surface-modifying agents are selected from the group consisting of hydrophobic surface groups, hydrophilic surface groups, and any combinations or mixtures thereof.
Item 31 is a powder blend according to item 29, wherein the surface-modifying agents are selected from the group consisting of hydrophobic surface groups, in particular organosilanes.
Item 32 is a powder blend according to any of the preceding items, which comprises the particulate metallic binder material in an amount ranging from 60 vol.% to 98 vol.%, from 70 vol.% to 95 vol.%, from 75 vol.% to 95 vol.%, from 80 vol.% to 95 vol.%, or even from 80 vol.% to 90 vol.%, based on the total volume of the powder blend.
Item 33 is a powder blend according to any of the preceding items, which comprises the abrasive particles in an amount ranging from 1 vol.% to 40 vol.%, from 1 vol.% to 35 vol.%, from 2 vol.% to 30 vol.%, from 5 vol.% to 30 vol.%, from 5 vol.% to 25 vol.%, from 5 vol.% to 20 vol.%, from 5 vol.% to 15 vol.%, or even from 10 vol.% to 15 vol.%, based on the total volume of the powder blend.
Item 34 is a powder blend according to any of the preceding items, which comprises the segregation-reducing additive in an amount ranging from 0.01 vol.% to 10 vol.%, from 0.05 vol.% to 10 vol.%, from 0.05 vol.% to 8 vol.%, from 0.1 vol.% to 8 vol.%, from 0.2 vol.% to 8 vol.%, from 0.2 vol.% to 6 vol.%, from 0.5 vol.% to 6 vol.%, from 0.5 vol.% to 5 vol.%, or even from 1 vol.% to 5 vol.%, based on the total volume of the powder blend.
Item 35 is a powder blend according to any of the preceding items, which comprises:
   a) from 60 vol.% to 98 vol.%, from 70 vol.% to 95 vol.%, from 75 vol.% to 95 vol.%, from 80 vol.% to 95 vol.%, or even from 80 vol.% to 90 vol.%, of the particulate metallic binder material;
   b) from 1 vol.% to 40 vol.%, from 1 vol.% to 35 vol.%, from 2 vol.% to 30 vol.%, from 5 vol.% to 30 vol.%, from 5 vol.% to 25 vol.%, from 5 vol.% to 20 vol.%, from 5 vol.% to 15 vol.%, or even from 10 vol.% to 15 vol.%, of the abrasive particles; and
   c) from 0.01 vol.% to 10 vol.%, from 0.05 vol.% to 10 vol.%, from 0.05 vol.% to 8 vol.%, from 0.1 vol.% to 8 vol.%, from 0.2 vol.% to 8 vol.%, from 0.2 vol.% to 6 vol.%, from 0.5 vol.% to 6 vol.%, from 0.5 vol.% to 5 vol.%, or even from 1 vol.% to 5 vol.%, of the segregation-reducing additive;
   wherein the volume percentages are based on the total volume of the powder blend.
Item 36 is a method of manufacturing a powder blend suitable for use in additive manufacturing, wherein the method comprises the step of mixing a particulate metallic binder material, abrasive particles and a segregation-reducing additive comprising silica nanoparticles.
Item 37 is a method of treating a powder blend suitable for use in additive manufacturing and which comprises a particulate metallic binder material and abrasive particles, wherein the method comprises the step of incorporating a segregation-reducing additive comprising silica nanoparticles.
Item 38 is a method of reducing the segregation of a powder blend (suitable for use in additive manufacturing and) which comprises a particulate metallic binder material and abrasive particles, wherein the method comprises the step of incorporating silica nanoparticles.
Item 39 is a method of manufacturing a three-dimensional article comprising the step of treating a powder blend according to any of items 1 to 35 by irradiation with a focused beam.
Item 40 is a method according to item 39, which comprises the sequential steps of:
   a) performing a subprocess comprising the sequential steps of:
      i. depositing a layer of a (loose) powder blend according to any of items 1 to 35 in a confined region;
      ii. optionally, spreading the layer of the (loose) powder blend, in particular with a spreading bar, to provide a substantially uniform thickness; and
      iii. selectively treating an area of the layer of the (loose) powder blend by irradiation with a focused beam to bond the metallic binder particles together;
   b) independently carrying out step a) a plurality of times to generate a three-dimensional article comprising the bonded particles and remaining non-bonded (loose) powder blend, wherein in each step a), the (loose) powder blends are independently selected; and
   c) separating substantially all the remaining non-bonded (loose) powder blend from the three-dimensional article, wherein the three-dimensional article comprises the abrasive particles and the silica nanoparticles retained in the metallic binder material.
Item 41 is a method according to any of item 39 or 40, wherein the focused beam comprises laser irradiation or e-beam irradiation.
Item 42 is a method according to any of item 39 or 40, wherein the step of treating the powder blend by irradiation with a focused beam comprises selective laser melting.
Item 43 is a three-dimensional article obtained by treating a powder blend according to any of items 1 to 35 by irradiation with a focused beam, in particular a laser or e-beam irradiation.
Item 44 is an article according to item 43, which is selected from the group of abrasive articles, in particular selected from the group consisting of grinding tools, drilling tools, and milling tools.
Item 45 is an article according to any of item 43 or 44, which is selected from the group consisting of dental burs, grinding pins, and abrasive wheels.
Item 46 is the use of a powder blend according to any of items 1 to 35 for additive manufacturing, in particular for the manufacturing of a three-dimensional article.
Item 47 is the use according to item 46, wherein the additive manufacturing comprises the step of treating the powder blend by irradiation with a focused beam, in particular a laser or e-beam irradiation.
Item 48 is the use according to any of item 46 or 47, wherein the additive manufacturing comprises a selective laser melting step.
Item 49 is the use of silica nanoparticles for reducing the segregation of a powder blend (suitable for use in additive manufacturing and) which comprises a particulate metallic binder material and abrasive particles.

### EXAMPLES

The present disclosure is further illustrated by the following examples. These examples are merely for illustrative purposes only and are not meant to be limiting on the scope of the appended claims.

### Test Method applied:

### Average particle size:

The average particle size of the various particulate material is determined by laser diffraction method according to Test Method ISO 13320 using a Sympatec Helos measurement device (HELOS-R Series, available from Sympatec GmbH).

### Materials:

In the examples, the following materials are used:
**CoCr powder** is a 20/60 micrometer diameter powder of cobalt chromium alloy, obtained from LPW Technology (Pittsburgh, PA).
**Co powder** is a 2-micrometer average diameter cobalt powder, obtained from Umicore Cobalt & Specialty Materials.
**Steel powder** is a 10/45 micrometer diameter steel powder, obtained from LPW Technology (Pittsburgh, PA) as LPW M300.
**Bronze powder 89/11** is a bronze powder having an average diameter below 45 micrometers, obtained from Ecka Granules GmbH.
**Diamond IDF FMD-20 D46 325/400 (uncoated)** is a 44/37 micrometer diameter diamond powder, obtained from Worldwide Superabrasives, LLC (Boynton Beach, FL).
**Diamond IMD-F Ti(C)W D76 (coated)** is a 76-micrometer average diameter diamond powder, coated in average 0.14 micrometer thickness titanium followed with average 0.8 micrometer thickness tungsten layer, obtained from Iljin (Seoul, Korea).
**CBN WWSA AMA 230/270** is a 55/75 micrometer diameter cubic boron nitride powder, obtained from Worldwide Superabrasives, LLC (Boynton Beach, FL).
**Surface modified nanosilica particles (SMNP)** are obtained according to the procedure described hereinafter.

### Examples:

### Preparation of surface modified silica nanoparticles (SMNP):

A mixture of 100 grams of colloidal silica (16.06 wt.% solids in water; 5 nm size), 7.54 grams of isoctyltrimethoxy silane, 0.81 grams of methyltrimethoxysilane and 112.5 grams of an 80:20 wt/wt. % solvent blend of ethanol:methanol are added to a 500 ml 3-neck round bottom flask (Ace Glass, Vineland, N.J.). The flask containing the mixture is placed in an oil bath set at 80°C with stirring for 4 hours to prepare hydrophobically modified nanosilica particles. The hydrophobically modified nanosilica particles are transferred to a crystallizing dish and dried in a convection oven at 150°C for 2 hours.

### Preparation of exemplary powder blends:

The exemplary powder blends Ex.1 to Ex.5 and comparative powder blends Ex.C1 to Ex.C5 are prepared by simply mixing the ingredients as shown in Table 1 and shaking in a Turbula shake-mixer (Willy A. Bachofen AG Maschinenfabrik, Switzerland). The comparative powder blends do not comprise silica nanoparticles as segregation-reducing additive. The amounts represented in Table 1 are expressed in vol.%.

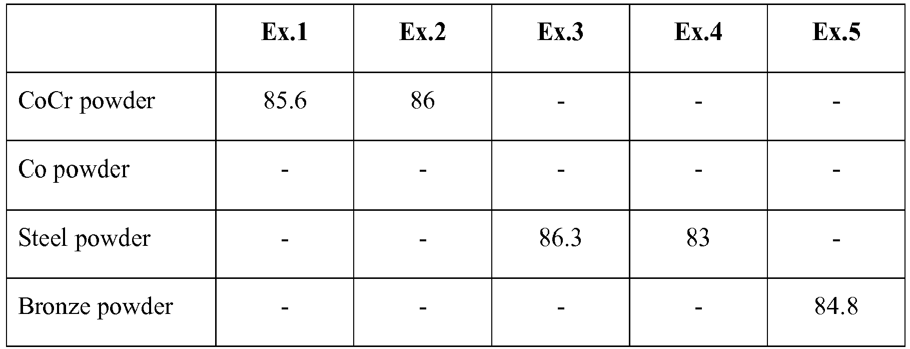

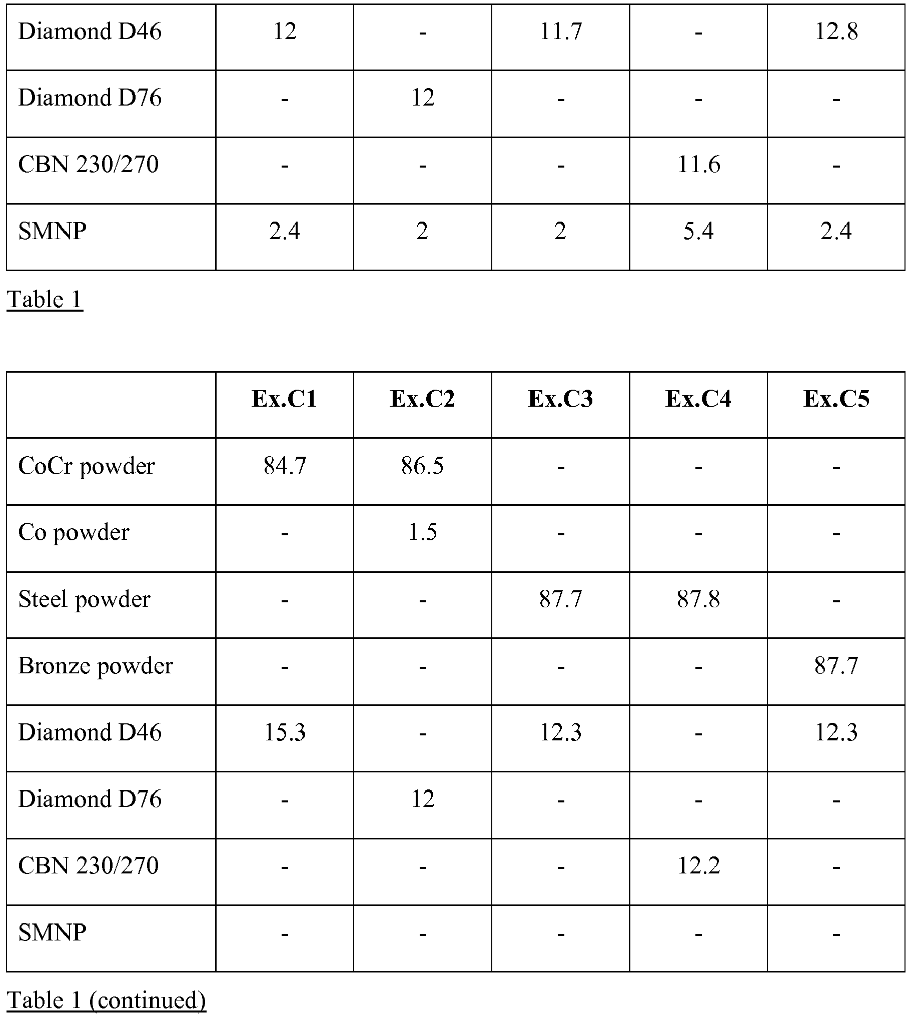

### Test Results:

### Experimental Test 1 - Microscopic observation:

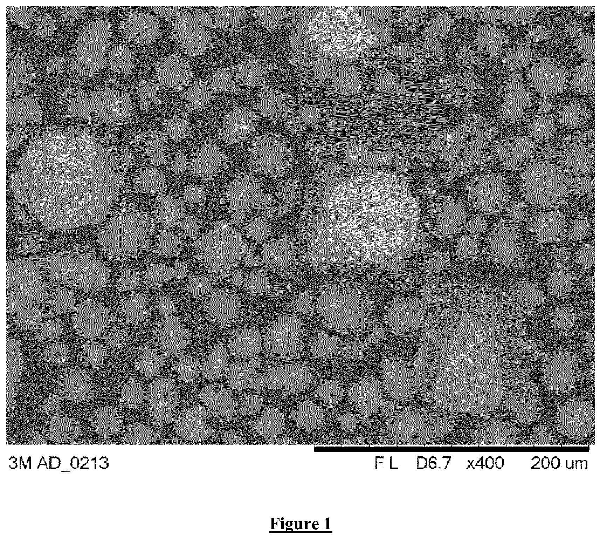

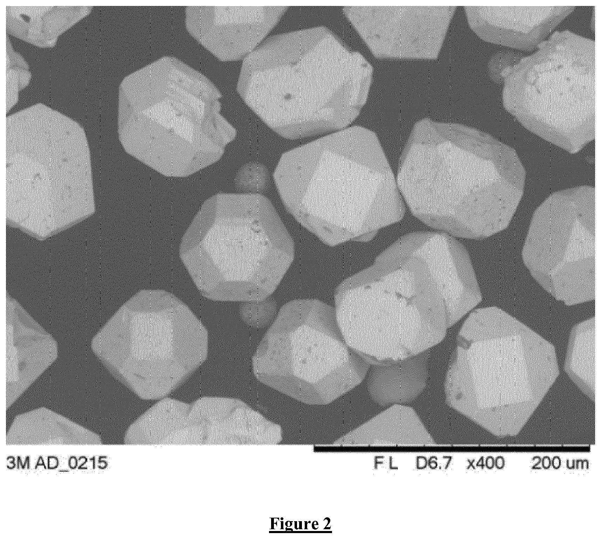

As can be seen from **FIG. 1** (SEM image showing the powder blend of Ex.2), the diamond particles - represented as essentially cubical particles - have a spotted surface wherein the spots correspond to silica nanoparticles bond to the surface of the diamond particles. In contrast, the diamond particles resulting for the powder blend according to Ex.C2 (not comprising silica nanoparticles) have a clean surface (see **FIG. 2**).

### Experimental Test 2 -Anti segregation performance (visual observation)

The anti-segregation performance is tested according to the following procedure:
The exemplary powder blends Ex.1 to Ex.5 and comparative powder blends Ex.C1 to Ex.C5 are prepared (10 grams), thoroughly mixed in a Turbula shake-mixer and placed in a conventional lab container. The powders are manually poured out of the container from a vertical distance of 5 centimeters onto a horizontal paper carrier.

All exemplary powder blends according to Ex.1 to Ex.5 provide a substantially reduced segregation effect when compared to their corresponding comparative powder blends Ex.C1 to Ex. C5, and when assessed by visual observation.

### Experimental Test 3 -Anti segregation performance (SEM observation)

The anti-segregation performance is tested according to the procedure described in Experimental Test 2 with the powder blend of Ex.2 and the comparative powder blend of Ex.C2.

The improved anti-segregation performance achieved with the powder of Ex.2 when compared to comparative powder blend Ex.C2 is clearly apparent from observation under SEM.

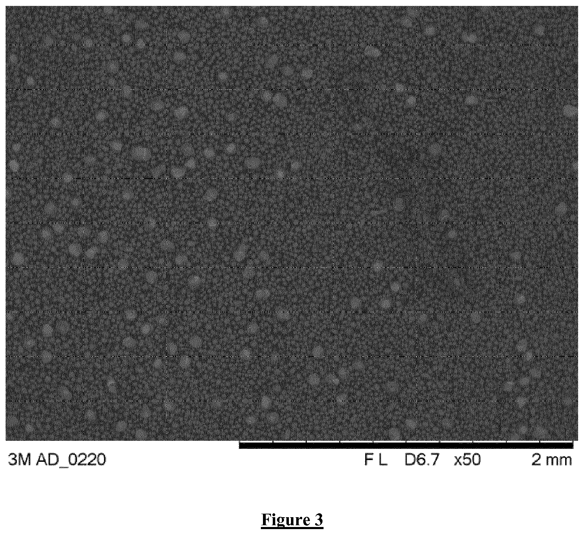

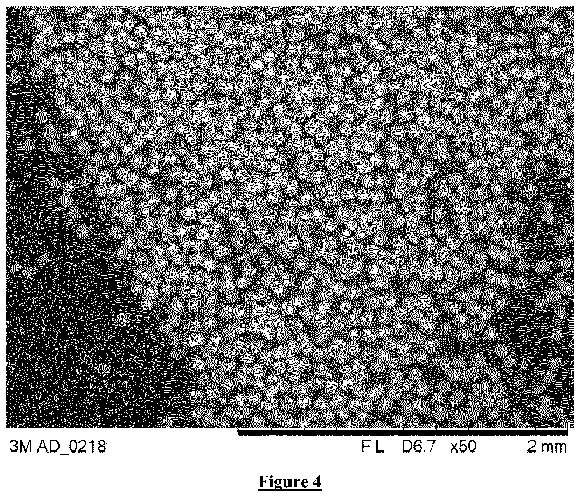

As can be seen from **FIG. 3** (magnified SEM image showing the powder blend of Ex.2), the diamond particles - represented as large light-colored particles - are homogeneously distributed within the powder blend. In contrast, the diamond particles resulting for the powder blend according to Ex.C2 (not comprising silica nanoparticles) highly segregate from the particulate metallic binder material and tend to agglomerate with each other (see **FIG. 4**).

### Experimental Test 4 - Additive manufacturing

The suitability for use in additive manufacturing is tested with the powder blend of Ex.2.

The powder blend is filled in a SLM-50 additive manufacturing device (available from Realizer GmbH, Borchen, Germany) and a steel support is fixed on the machine moving platform.In order to ensure good attachment between the blend and steel support, the following laser parameters are used: power of 52 Watts (W), continuous mode, scanning speed of 500 mm/s, 25 micrometers layer size, 50 microseconds spot duration, 20 micrometers spot distance, line distance of the hatching pattern of 60 micrometers, and two scanning passes at -15° and 45°. Small blocks (10 x 5 x 5 mm) with excellent resolution and good attachment to the support are obtained.

## Claims

1. A powder blend for use in additive manufacturing, which comprises a particulate metallic binder material, abrasive particles and a segregation-reducing additive for the powder blend, wherein the segregation-reducing additive comprises silica nanoparticles.

2. A powder blend according to claim 1, wherein the average particle size of the abrasive particles is greater than the average particle size of the particulate metallic binder material.

3. A powder blend according to any of claim 1 or 2, wherein the ratio of the average particle size of the abrasive particles to the average particle size of the particulate metallic binder material is in a range from 1.1 to 20, from 1.1 to 18, from 1.2 to 15, from 1.2 to 10, from 1.5 to 10, or even from 1.5 to 5.

4. A powder blend according to any of the preceding claims, wherein at least part of the silica nanoparticles is bond to at least part of the surface of the abrasive particles, thereby forming silica nanoparticles-modified abrasive particles.

5. A powder blend according to any of the preceding claims, wherein the bulk density of the abrasive particles is smaller than the bulk density of the particulate metallic binder material.

6. A powder blend according to any of the preceding claims, wherein the ratio of the bulk density of the particulate metallic binder material to the bulk density of the abrasive particles is in a range from 1.1 to 20, from 1.1 to 18, from 1.2 to 15, from 1.2 to 10, from 1.5 to 10, or even from 1.5 to 5.

7. A powder blend according to any of the preceding claims, wherein the metallic binder material is selected from the group consisting of cobalt, chromium, bronze, copper, tin, iron, iron alloys, silver, nickel, tungsten, titanium, manganese, aluminum, silicon, any carbide or nitride forms thereof, and any combinations, mixtures or alloys thereof.

8. A powder blend according to any of the preceding claims, wherein the metallic binder material is selected from the group consisting of cobalt, chromium, cobalt-chromium alloys, and any combinations or mixtures thereof.

9. A powder blend according to any of the preceding claims, wherein the abrasive particles comprise a material selected from the group consisting of diamond, boron nitride, cubic boron nitride, silicon carbide, boron carbide, silicon nitride, metal oxide ceramic, metal nitride ceramic, metal carbide ceramic, any combinations or mixtures thereof.

10. A powder blend according to any of the preceding claims, which comprises the particulate metallic binder material in an amount ranging from 60 vol.% to 98 vol.%, from 70 vol.% to 95 vol.%, from 75 vol.% to 95 vol.%, from 80 vol.% to 95 vol.%, or even from 80 vol.% to 90 vol.%, based on the total volume of the powder blend.

11. A powder blend according to any of the preceding claims, which comprises the abrasive particles in an amount ranging from 1 vol.% to 40 vol.%, from 1 vol.% to 35 vol.%, from 2 vol.% to 30 vol.%, from 5 vol.% to 30 vol.%, from 5 vol.% to 25 vol.%, from 5 vol.% to 20 vol.%, from 5 vol.% to 15 vol.%, or even from 10 vol.% to 15 vol.%, based on the total volume of the powder blend.

12. A powder blend according to any of the preceding claims, which comprises the segregation-reducing additive in an amount ranging from 0.01 vol.% to 10 vol.%, from 0.05 vol.% to 10 vol.%, from 0.05 vol.% to 8 vol.%, from 0.1 vol.% to 8 vol.%, from 0.2 vol.% to 8 vol.%, from 0.2 vol.% to 6 vol.%, from 0.5 vol.% to 6 vol.%, from 0.5 vol.% to 5 vol.%, or even from 1 vol.% to 5 vol.%, based on the total volume of the powder blend.

13. A method of manufacturing a powder blend suitable for use in additive manufacturing, wherein the method comprises the step of mixing a particulate metallic binder material, abrasive particles and a segregation-reducing additive comprising silica nanoparticles.

14. A three-dimensional article obtained by treating a powder blend according to any of claims 1 to 12 by irradiation with a focused beam, in particular a laser or e-beam irradiation.

15. Use of a powder blend according to any of claims 1 to 12 for additive manufacturing, in particular for the manufacturing of a three-dimensional article.
